(19) Europäisches Patentamt
European Patent Office
Office européen des brevets

(11) **EP 4 261 535 A1**

(12) **EUROPEAN PATENT APPLICATION**

(43) Date of publication:
**18.10.2023 Bulletin 2023/42**

(21) Application number: **22305540.1**

(22) Date of filing: **13.04.2022**

(51) International Patent Classification (IPC):
***G01N 27/90*** *(2021.01)*

(52) Cooperative Patent Classification (CPC):
**G01N 27/9046**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Westinghouse Electrique France SAS
91401 Orsay Cedex (FR)**

(72) Inventors:
• **LE BARBER, Patrick
  92160 ANTONY (FR)**
• **LECOMTE, Quentin
  78180 MONTIGNY LE BRETONNEUX (FR)**
• **SUBLEMONTIER, Jacques-Henri
  45170 Neuville-aux-Bois (FR)**

• **FOSTER, Conan D.
  HARRISON CITY, 15636 (US)**
• **SANGOUARD, Arnaud
  75013 PARIS (FR)**
• **GRASSI, Laura
  78470 ST-REMY-LES-CHEVREUSE (FR)**
• **MEIGNEN, Pierre-Antoine
  91140 VILLEBON-SUR-YVETTE (FR)**

(74) Representative: **Santarelli
Tour Trinity
1 bis Esplanade de la Défense
92035 Paris La Défense Cedex (FR)**

Remarks:
Amended claims in accordance with Rule 137(2)
EPC.

(54) **METHOD FOR AUTOMATIC FLAWLESS TUBE DETECTION**

(57) The present invention concerns A method of flawless tube detection, wherein the method comprises: obtaining raw data from an eddy current sensor displaced into a tube in a steam generator; segmenting the tube into different parts based on its geometry; computing, for each part of the tube, a plurality of frames of data, each frame corresponding to a given feature of a set of features computed from the raw data associated with the part of the tube; for each part of the tube, predicting whether the part of the tube is flawless using at least one trained machine learning model on the plurality of frames of data associated with the part of the tube, the trained machine learning model being trained on frames of data from the same part of different tubes; and predicting whether the tube is flawless from the prediction obtained for each part of the tube.

Fig. 2

EP 4 261 535 A1

**Description**

FIELD OF THE INVENTION

The present disclosure concerns a method for detecting flawless tubes by using Eddy Current (EC) Non-Destructive Examination (NDE) techniques, for example steam generator tubes in a nuclear plant. It concerns more particularly an automatic method aiming at determining if a tube is flawless based on the analysis of eddy current measures.

BACKGROUND OF INVENTION

Nuclear power plants can be generally described as including a reactor that has one or more fuel cells, a primary loop that cools the reactor, and a secondary loop that drives a steam turbine to operate an electrical generator. Typically, such nuclear power plants additionally include a heat exchanger positioned between the primary and secondary loops. The heat exchanger is in the form of a steam generator which includes tubes that carry the primary coolant and a plenum that carries the secondary coolant in heat-exchange relationship with the tubes and therefore, with the primary coolant.
It is known in the industry that the tubes of a steam generator are subject to wear from mechanical vibration, corrosion, and other mechanisms. Both manual and automated processes have been developed to detect and address this concern. Periodic inspection of the tubes of a steam generator for wear is necessary to avoid failure of a tube and the consequences resulting therefrom, for example, potential nuclear contamination of the secondary loop.
Known manual and automated processes have limitations associated therewith. For example, methods of measuring tube-to-tube proximity (i.e., the spatial relationship between two adjacent steam generator tubes), a potential precursor for tube-to-tube contact wear, has been found to be cumbersome and unreliable. Guidelines, analysis training and process changes have been implemented in the art with varying levels of success.
A known method of inspecting the tubes of a steam generator involves the insertion of an eddy current sensor into one or more of the tubes. A signal is received from the eddy current sensor, which is in the form of a voltage and a phase angle. An analyst can review the signal data to ascertain the current condition of the tubes of the steam generator. However, the analyst must possess a high degree of expertise in order to accurately ascertain from the signal data the current condition of the tubes of the steam generator. A typical steam generator may possess between three thousand and twelve thousand tubes, by way of example, with each tube being several hundred inches in length. Thus, the review of eddy current data can require a large expenditure of time by the analyst. This analysis requires to stop the operation of the plant, which implies a cost related to the duration of the analysis.

SUMMARY OF THE INVENTION

The present invention has been devised to address one or more of the foregoing concerns. It concerns a method based on machine learning aiming at screening non flawless tubes in order to let the analysts concentrate on suspect ones.
According to a first aspect of the invention there is provided a method of flawless tube detection, wherein the method comprises:

- obtaining raw data from an eddy current sensor displaced into a tube in a steam generator;
- segmenting the tube into different parts based on its geometry;
- computing, for each part of the tube, a plurality of frames of data, each frame corresponding to a given feature of a set of features computed from the raw data associated with the part of the tube;
- for each part of the tube, predicting whether the part of the tube is flawless using at least one trained machine learning model on the plurality of frames of data associated with the part of the tube, the trained machine learning model being trained on frames of data from the same part of different tubes; and
- predicting whether the tube is flawless from the prediction obtained for each part of the tube.

In an embodiment, the set of features comprises at least one feature in each of the following categories:

- Mono-Frequency Mono-Channel measures;
- Mono-Frequency Poly-Channel measures;
- Poly-Frequency Poly-Channel measures.

In an embodiment, the set of features is different for at least two different parts of the tube.
In an embodiment, the machine learning model belongs to two different classes of machine learning models for at least two different parts of the tube.

In an embodiment, the machine learning model of the trained machine learning model is selected by training among a plurality of machine learning model classes.

In an embodiment, for each part of the tube, predicting whether the part of the tube is flawless comprises:

- obtaining a first prediction using each trained machine learning model of a plurality of trained machine learning models; and
- predicting whether the part of the tube is flawless from the combination of first predictions.

In an embodiment, the combination is made using a voting system.

In an embodiment, the combination is made using a further trained machine learning model taking as input the first prediction.

In an embodiment, the trained machine learning model is trained using a supervised training method.

In an embodiment, the trained machine learning model is trained using an unsupervised training method.

According to another aspect of the invention there is provided a computer program product for a programmable apparatus, the computer program product comprising a sequence of instructions for implementing a method according to the invention, when loaded into and executed by the programmable apparatus.

According to another aspect of the invention there is provided a non-transitory computer-readable storage medium storing instructions of a computer program for implementing a method according to the invention.

According to another aspect of the invention there is provided a device for flawless tube detection, wherein the device comprises a processor configured for:

- obtaining raw data from an eddy current sensor displaced into a tube in a steam generator;
- segmenting the tube into different parts based on its geometry;
- computing, for each part of the tube, a plurality of frames of data, each frame corresponding to a given feature of a set of features computed from the raw data associated with the part of the tube;
- for each part of the tube, predicting whether the part of the tube is flawless using at least one trained machine learning model on the plurality of frames of data associated with the part of the tube, the trained machine learning model being trained on frames of data from the same part of different tubes; and
- predicting whether the tube is flawless from the prediction obtained for each part of the tube.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible, non-transitory carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

Figure 1 illustrates the main steps of a method for input data treatment according to an embodiment of the invention.
Figure 2 illustrates the main steps of a training method used to obtain a set of trained models.
Figure 3 is a schematic block diagram of a computing device for implementation of one or more embodiments of the invention.

DETAILED DESCRIPTION OF THE INVENTION

The invention aims at detecting flawless tubes by using Eddy Current (EC) Non-Destructive Examination (NDE) techniques, for example steam generator tubes in a nuclear plant, but it may be used to analyze different kind of tubes (diameters, material, length, thickness), in particular those used in steam generator of any kind of plant.

Automated analysis of eddy current signals in steam generator tube inspection have been available over more than a decade to enhance the accuracy, consistency, and rapidity in the detection process. Because of the large amount of data records to examine, and to avoid human errors that might occur especially under stress conditions circumstances, new code, theoretical models and codes are in continuous development. Benefits of this approach are mainly focused on increasing safety and decreasing expenditure. Potential benefits include cost savings by reducing manpower and equipment requirement needs. Cost savings come with schedule savings by both reducing the impact of data analyst shortages during peak outage periods and providing analysis results at rates equal to or less than the rates for data acquisition. Then the reliability improvements by providing consistent, repeatable, and accurate inspection results is also at stake.

Artificial Intelligence made significant progress in the last few years and especially Machine Learning theoretical approach. The proposed method is based on supervised or unsupervised machine learning methods in order to automatically classify a tube as flawless or not. The proposed supervised approach relies on feature selection in a pipeline which is adjustable to various heat exchanger.

The geometry of the tube and the different contact parts of the tube impact the measures of eddy current. It is important to differentiate these influences in the signal from perturbation that may be caused by deficiencies. To correctly evaluate the tube condition, tube geometry and location of the different supports play an important role and must be known. In the exemplary embodiment, all tubes have a "U" form with a curve section of variable radius. The U-bend section is in the superior part of the tube prolonged with two straight sections, called hot and cold leg, one connected to a so-called cold box, the other one connected to a hot box. The hot box is the source of heat filled with hot primary coolant. This hot primary coolant circulates in the tube, entering the hot leg, and exchange heat with the secondary coolant surrounding the tube. The cooled primary coolant is collected in the cold box through the cold leg.

Each tube in a steam generator is identified by row and column coordinates. The radius, and thus the length of the curved part, depends on the line coordinate.

Each tube may suffer from different kind of damages. These damages, flaws are categorized in different flaw families. Each flaw family may be associated with different set of measure signal values, detection thresholds, etc, that are particularly adapted for its detection. These families of flaws may comprise mud corrosion, external corrosion, choc, conducting material deposition, localized conduction material, irregular crimping, localized deformation, mud height, cracking, lack of material, wear, for example.

The measures are obtained by circulating an axial probe within the tube. This probe comprised two coils, each used as transceiver for emitting and receiving signals. Two kinds of channels are generated, differential channels when the two coils are used in reception as a comparator, and absolute channel when a single coil is used in reception. The differential channels are particularly sensitive to punctual indication but fails to detect slow transitions. The absolute channel is used to observe the slow transitions.

In the exemplary embodiment, three differential channels and one absolute channel are recorded. Each channel is composed of two components X and Y corresponding to perpendicular measures relatives to the tube geometry. The three differential channels are acquired for three different frequencies of the excitation signal, base, high and low frequencies. The channel may be seen as composed of complex signals where the two components X and Y represent the real part and the imaginary part of complex values.

Along with the actual channels, metadata describing the tube are provided. These metadata provide the identification of the tube, a description of its geometry, the localization of the singular events along the tube like the localization of the points where the tube crosses the support plates, the extremity of the curved zone and other particularities having an impact on the measured signal. The metadata also allows the precise localization along the tube of the measured samples of the different channels. The channels of measures along with the metadata describing the tube constitute the input data of the system.

We have described the raw data acquired in the exemplary embodiment, some embodiments may use different kind of raw data, different channels, or different frequencies without departing from the invention.

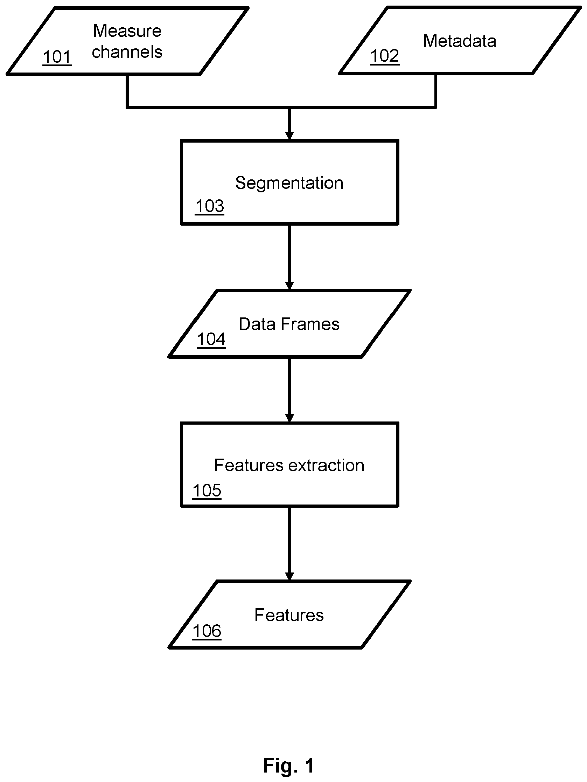

**Figure** 1 illustrates the main steps of a method for input data treatment according to an embodiment of the invention.

The input data are constituted by the measure channels 101 described above and the associated metadata 102 describing the tubes.

In a first step 103, the channels of measures are segmented so that every known geometrical event related to the tube (support plates, U-bend, tube's feet, *etc.)* is positioned along with boundaries. The result of the segmentation step is a collection of data frames and associated metadata. Geometrical events positions with their boundaries are further transformed to localized data frames 104. A frame of samples is a segment of a channel of measures corresponding to a set of consecutive samples extracted from a channel of measures. Its localization is determined by the geometrical event and its size is variable by the way of boundaries parametrization. The size may vary according to the localization and is generally fixed for localization containing a geometrical event. The size of the frames is not fixed when the frame is located between geometrical events, as it depends on boundaries of surrounding frames. Ultimately, frames should overlap in such a way that any position in a signal is covered by at least one frame. Two different families of frames may so be distinguished. A first family of frames correspond to regular segment of a tube, like a segment of straight tube between two support plates. A second family of frames correspond to a part of the tube comprising a particularity having an impact on the measures, like a support plate, the U-bend part of the tube or the expanded part at the extremity of the tube. Each frame is associated with metadata comprising the identification of the tube, the type of the frame, and its precise localization relative to the tube geometry.

Data frames are then further processed to provide extra channels of measures. These additional channels may correspond to linear combinations of the existing channels. It is classical to compute linear combinations of the differential channels to minimize the impact of some elements of the signals like, for example:

- A channel, called C1, corresponding to the linear combination of the differential channel at normal frequency F2, for example 280 kHz, and the differential channel at low frequency F3, for example 120 kHz. The channel C1 may be expressed as $C1 = F2 - X.F3$, where X is a complex parameter determined to reduce support plate signals.
- A channel, called C2, corresponding to the linear combination of the differential channel at high frequency F1, for example 600 kHz, and the differential channel at normal frequency F2. The channel C2 may be expressed as $C2 = F2 - X.F1$, where X is a complex parameter determined to reduce metallurgic noise signals.
- A channel, called C3, corresponding to the linear combination of the differential channel at high frequency F1, and the differential channel at low frequency F3. The channel C3 may be expressed as $C3 = F3 - X.F1$, where X is a complex parameter determined to reduce dimensional variation signals.
- A channel, called C4, corresponding to the linear combination of the differential channel at high frequency F1, and the differential channel at low frequency F3. The channel C4 may be expressed as $C4 = F1 - X.F3$, where X is a complex parameter determined to reduce support plate signals.

Furthermore, other channels can be computed through a decomposition methodology. Each localized frame is considered to represent a set of measure that typically evolve around a reference value which is then corrupted by either (1) a long-term deviation that may correspond to fouling (mud deposit, etc.), (2) short term deviations corresponding to local irregularities, (3) standard strong signal corresponding to an expected geometric event if any and finally (4) metallurgic noise corresponding to the tube. It may be provided a methodology isolating each of these components, for instance:

- Reference level through a standard averaging (or median) of each channel at the frame-level.

- Long term deviation through a trend computation.

- Geometric event signal through pattern matching with a reference.

- Noise signal computed from prediction of a dedicated (tube level) fitted noise model.

- Short term deviations through the remaining signal.

Then each of these new components exhibit their own local piece of information about the original signals for each channel.

Whatever the methodology of producing the new channels, these are treated similarly as the channels of measures used for analysis. It is to be noted that channels of measures are also generated for training the system. The only difference is that each tube is either marked as flawless or defective, at least for supervised training. A tube is marked as flawless if a human expert has not detected any defect on this tube. A tube is marked as defective if at least one defect has been detected. In that case, each detected defect family and localization on the tube is provided in the metadata 102. Each generated frame is provided with a status according to the status of the tube. All the frames corresponding to a flawless tube are marked as flawless. For the frame corresponding to a defective tube, the status depends on the localization of the defect. If the frame does not correspond to a part of the tube comprising a defect, it is marked as flawless. If the frame corresponds to a part of the tube comprising one or more defect, it is marked as defective with an indication relative to the family of defect that has been detected.

This collection of localized frames is then subjected to a step of feature extraction aiming at generating objects associated with numerical features. These features are used for model fitting and prediction.

The architecture is based on several features. These features are formally categorized as follows:

- MFMC features are Mono-Frequency Mono-Channel measures corresponding to features computed in a mono-variate way on each channel/frequency of interest.

- MFPC features are Mono-Frequency Poly-Channel measures corresponding to features computed in a bi-variate way on each frequency of interest.
- PFPC features are Poly-Frequency Poly-Channel measures corresponding to features computed in a multi-variate way on a set of channel/frequencies of interest.
- These features can then be further sub-categorized according to the information they exploit. They can be summarized on 2 families: statistic and geometry based features: Statistic features consist of features synthetizing data as collection, analysis, interpretation, and masses of numerical data (as for example Variance, Covariance, Skewness, Coskewness, Kurtosis, Cokurtosis, eigenvalues of some correlation matrices, etc.).
- Geometry features deals with bidimensional view (Lissajous): Bounding boxes or convex hull metrics or synthetic metrics of peak to peak vector within the Lissajous signal, etc.).

As a set of examples, we present some features that are computed and integrated within the feature extraction step of the analytical pipeline. In the following, let $x$ represents a series of $s$ samples.
The variance measure is defined as:

$$Variance(x) = \frac{1}{s-1} \sum_{j=1}^{s} \left( x_j - \bar{x} \right)^2$$

Where $\bar{x}$ is the mean of $x$.
x can correspond to the series of a specific channel of analysis (e.g. X280D, being the X channel from 280 Khz analysis in differential mode), leading the variance measure to be a MFMC feature. x can also correspond to the series corresponding to the modulus of the complex composed of X and Y channels of a given frequency (e.g. X280D+iY280D), leading the variance measure to be a MFPC feature.
The skewness measure is defined as:

$$Skewness(x) = \frac{\sum_{j=1}^{s}(x_j - \bar{x})^3 / s}{\left( \sum_{j=1}^{s}(x_j - \bar{x})^2 / s \right)^{3/2}}$$

The skewness measure can also be either a MFMC or a MFPC feature depending on the nature of the x vector.
The kurtosis measure is defined as:

$$Kurtosis(x) = \frac{\sum_{j=1}^{s}(x_j - \bar{x})^4}{\left( \sum_{j=1}^{s}(x_j - \bar{x})^2 \right)^2}$$

Let y represent another series of n samples. Correlation measure is defined as:

$$Correlation(x, y) = \frac{\frac{1}{s-1} \sum_{j=1}^{s}(x_j - \bar{x})(y_j - \bar{y})}{\left( \frac{1}{s-1} \sum_{j=1}^{s}(x_j - \bar{x})^2 \right)^{1/2} \left( \frac{1}{s-1} \sum_{j=1}^{s}(y_j - \bar{y})^2 \right)^{1/2}}$$

Being computed for a set of pair of series (e.g. all pairs of differential X channels in the set {X120D, X280D, X600D}), correlation measures are considered as PFPC features. Let L = (x,y) be a two dimensional series of s samples. When x and y series correspond to X and Y channels of a given frequency analysis, the graph of the (x, y) 2D series is called a Lissajous figure. It is also the figure associated with the complex vector $x + iy$ in the complex plane.
In the 2D plane, the rectangular bounding box area is defined as:

$$RectangularBoundingBoxArea(L) = |\max(y) - \min(y)||\max(x) - \min(x)|$$

The max vector within the Lissajous is defined by its two extrema points, being the two most distant points $x_i, y_i$ and $x_j, y_j$, one being max vector's head. Then, max vector's amplitude defined as:

$$maxVectorAmplitude = mod\big((x_j - x_i) + i(y_j - y_i)\big)$$

is a MFPC feature. For instance, the max vector amplitude can be computed for the Lissajous associated with X280D and Y280D channels.

Max vector's phase defined as:

$$maxVectorPhase = arg\big((x_j - x_i) + i(y_j - y_i)\big)$$

is a MFPC feature.

Max vector's width defined as:

$$maxVectorWidth = |j - i|$$

is also a MFPC feature.

The invention states on coupling an important number of features for each frame with machine learning models able to select a smaller set of features according to their performances (success rate) and/or transform weak set of features to strong ones.

For each frame, the full set of features, the maximum number of features being selected, and the predefined scores thresholds can be able/disable and/or modified by the user.

Different kinds of models may be used in machine learning. Each kind of models defines a class or a family of models. A class of models is based on a general common architecture of the model parameterized with a set of hyper parameters. A particular value of the set of hyper parameters defines a given model, also called a model instance, within the class. Each model instance of a given class defines a set of internal parameters. The internal parameters are the parameters which are optimized for a given problem through machine learning in an operation called training. Once properly trained the model is called a parameterized model, ready for prediction.

For some classes of models, different models within the class may be used in combination. Two main ways of combining models of a class may be used.

A first method of combining models of a class is called boosting. Boosting is a general-purpose learning methodology (also termed meta-learning algorithm) consisting in creating a sequential family of M weak model instances (performing slightly better than random-guessing) and combining them with a weighted linear combination, leading to an arbitrary higher performing instance.

A second method of combining models of a class is called bagging. Bagging is also a general-purpose learning methodology. It is based on bootstrap and aggregation. Bootstrap technique consists in generating several (M) datasets from an original one. Each dataset is composed by original dataset's items sampled independently with replacement. Then a family of model instances is fitted on each dataset. Predicting with bagged algorithms then essentially corresponds to performing an aggregation of each individual instance prediction. The model instances produced by bagging, contrary to boosting are independent.

A first family of models considered is called the Generalized Linear Model (GLM). In the context of binary classification, we consider the logistic regression setup of GLM. The purpose of logistic regression is to estimate regression coefficients to maximize agreement between a transformation of the linear predictor and the target variable Y (associated with Labels). The variable Y represents the probabilities $P_i$ of each frame taking the value defective indicating a flaw (positive class *wrt.* flaw detection). With X being the features matrix with n frames (rows) and p features (columns), the linear predictor is given as:

$$\eta = X\beta$$

Then, the linear predictor relates to the expected Y variable values through a link function g considered to be the logit function in binary classification setup:

$$g(P_i) = ln\left(\frac{P_i}{1 - P_i}\right)$$

Then $\beta$ parameters are adjusted so that globally each transformed predicted value $g^{-1}(X_i,\beta)$ matches $Y_i$.

These Generalized Linear Models may be subjected to extensions (e.g. lasso, ridge or further elastic-net) that essentially are regularizations of the original GLM equation. According to these embodiments, feature selection may occur while fitting by reducing the effect of some features naturally to 0. This class of models is called GLM elastic-net. Accordingly, these models are sparse in terms of the number of useful features for the prediction.

In some embodiments, boosted GLM elastic-net are considered. Boosting GLM elastic-net models allows the production of a sequence of individual GLM elastic-net and leverage them simultaneously to predict the status of a frame of features with a weighted averaging approach.

An alternative class of models may be considered in some embodiments, called the random forest. Random forest models are based on decision trees. A decision tree is a classification approach that recursively builds subdivisions of feature space. This subdivision is performed by identifying appropriate thresholds for each feature space. In the end, for each group of data items in a same subdivision, a predicted value of the status, flawless of defective, is determined based on a majority rule. A major interest of these models is a fast computation time and the interpretability or the resulting model. Typically, the definition of the status can be expressed in terms of rules concerning features and thresholds. The prediction is reproducible, a same result is obtained for successive executions. In some embodiments, boosted decision trees are used to leverage this approach.

Random forests are defined as bagging for aggregating model instances of decision trees. Advantageously, for each split in a tree, the optimal feature to split is taken from a random subset of original features.

In some embodiments, the decision trees may be leveraged by boosting methods.

Another class of models that can be used in some embodiments of the invention is called k-nearest neighbors algorithm. According to this model, the status of a data item is predicted from the status of the k closest neighbors data item in the training dataset. The status is determined according to a majority vote of its k neighbors.

Yet another class of models that can be used in some embodiments of the invention is constituted by neural networks.

We consider here an alternative setup for defective frames detection. Instead of learning a discriminative model *wrt.* to a population of defective and flawless frames, we consider learning a model that is able to (1) transform input data from input representation into a compressed representation and (2) reconstruct compressed data back to the original input representation, such that (3) the reconstructed data is close to the original data for flawless frames and inaccurate for defective frames.

Among the models adapted for such training setup, we consider the family of autoencoders. An autoencoder (AE) is composed of two building blocks which usually are two neural networks. Firstly, the encoder *enc* is dedicated to compress each data $x_i$ toward a vector valued code $z_i$ of usually smaller size. Secondly, the decoder *dec* performs the reconstruction of $z_i$ toward an estimated $x_i$: $\widehat{x_i}$. Encoder and decoder are jointly trained so that to minimize the reconstruction loss $L(x_i, \widehat{x_i})$ for each input data. The training consists in estimating the networks weights $\varphi_{enc}$ and $\varphi_{dec}$ for both models. A typical loss used in practice is the mean squared error (MSE) as in a regression setup:

$$L(x_i, \widehat{x_i}) = \|x_i - \widehat{x_i}\|_2^2$$

In defective frames detection context we would like to detect efficiently whether a frames is defective or flawless solely based on the input signal. Thus, each input data is a reshaping of a frame signal matrix of dimensions *frame size × channels* (e.g. frame size can correspond to 512 sample points and we may consider 20 channels for each X and Y combination of original frequencies (600D, 280D, 120D, 120A) and subsequent mixes (C1, C2, C3, C4, C5, C6). The main trick to consider to match the defective detection goal is then to provide the AE network only flawless frames so that the model is specialized (optimized) in reconstructing normal pieces of signal measurements. Then at prediction time the model is intended to produce low reconstruction errors for flawless frames and higher reconstruction errors for defective frames. Finally, to be able to properly compare this detection approach and mix it with original classification-based approaches, it is mandatory to define a threshold within the reconstruction loss range for each data so that an observed reconstruction loss below the threshold corresponds to a flawless detection, while an observed reconstruction loss above the threshold corresponds to an defective frame detection. The threshold is defined either as the max or within the range of reconstruction errors we finally obtain after training in case we want to avoid false positive detection (actual defective frames that are predicted as flawless). Alternatively, a slightly higher threshold may enable more generalization in terms of flawless frame detection, avoiding false negatives.

In some embodiment another approach to combine models may be used, called stacking. This method, as boosting and bagging, intends to build a more accurate model from a set of base model. The key difference with boosting and bagging is that stacking is used from a set of base models that are usually different. The stacking problem may be redefined as the model fitting applied to a latent representation where the new features are predictions obtained from the set of base models. Typically, it is first needed to perform a standard model fitting to build the base model on a given training dataset. Then on another training dataset, new features are built by applying predictions of base models for each data item, the stacked models are then fitted using these predictions as features. The stacked model may be fitted using any of the models we already described. Nevertheless, it is very usual to leverage simple and interpretable approaches as the new features are intended to be of high quality. In an embodiment, for stacked models, *GLM, GLM with some feature selection* (selection among prediction of base models) and *boosted GLM elastic-net* are used.

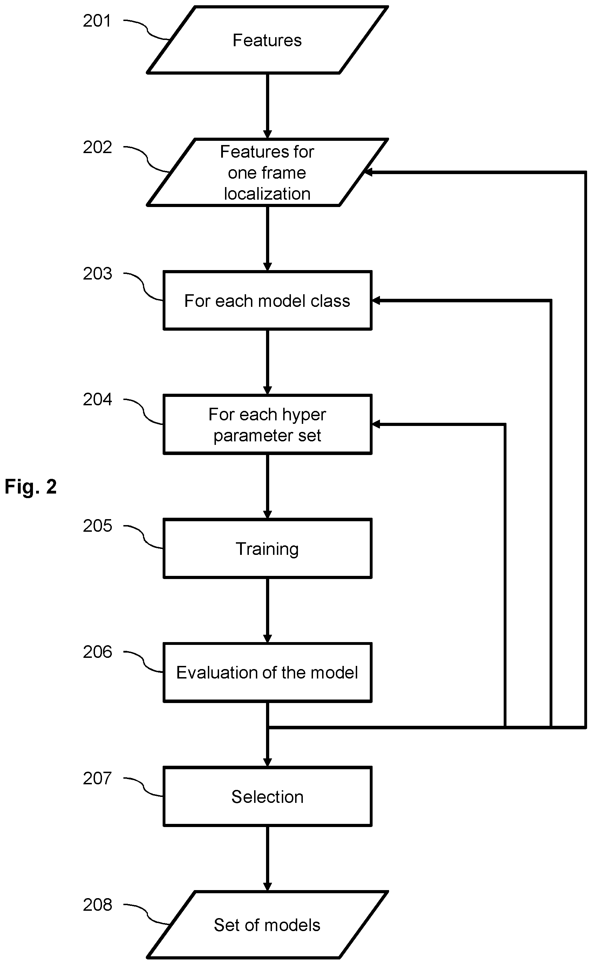

**Figure 2** illustrates the main steps of a training method used to obtain a set of trained models.

The training aims at determining a set of models achieving the best performance on a training data set. A first approach is based on supervised training. A selected training data set is considered consisting in a collection of tubes for which we know the status, defective or flawless, from a human expertise. For each tube, the row data have been pre-processed and split into frames according to particular localization of the tube. Then features have been extracted for each frame of data. This means that for each particular localization of the tubes, for example straight parts, curves, plate support, extremity, we get for each tube a set of extracted features associated with the corresponding frame of raw data measured on this localization. It is worth noting that the set of features extracted from a frame may vary according to the localization.

A different process of training is performed for each localization of the tubes based on the set of features obtained for the frame associated with this localization for each tube of the training data set.

The training may be made for a selection of one or more classes of models. Each class of models is defined by a set of hyper parameters. A particular set of values of these hyper parameters defining an instance of the class of models, namely a given model. The model is then trained on the training data set to obtain a trained model defined by a set of values of its internal parameters.

In a first step 201, the set of features of the training data set is used as input for the training. The training data set corresponds to a selection of tubes for which the flawless status has been determined and is known. On typical infrastructure, the number of flawless tubes is far more important than the number of defective tubes. But the flawless tubes are more uniform as there are many ways for a tube to be defective. Advantageously, a number of flawless tubes is selected to be the same as the number of available defective tubes to reduce the size of the training data set. This selection may be done arbitrarily, for example randomly.

In a step 202, a first localization is selected. The set of features associated with frames corresponding to this localization on the tubes of the training data set are selected.

In a step 203, a first class of models among the selected classes of models is selected. This class of models is defined by a type of models and associated hyper parameters.

In a step 204, a first set of hyper parameter values is selected for the current class of models. This set of hyper parameter values determines a particular model in the class.

In a step 205, the selected model in the selected class of models is trained using the set of features selected in step 202. This training aims at determining the values of the internal parameters according to known learning methods on the selected set of features.

In a step 206, the performance of the trained model is evaluated. The evaluation is made on a set of data for which, like the training data set, the status is known. Advantageously, the whole training data set is split, typically randomly, in k different parts. The training step 205 is performed on k-1 parts of the data set. The evaluation of the performance of the trained model is performed on the remaining part of the data set, called the test data set. Accordingly, the evaluation is done on data which have not been used in the training. This is to avoid an over training issue.

In some embodiments, a cross validation may be performed. The training is conducted k times, each time a different part as the test data set. Then, this operation may be performed l times, leading to l different random split of the training data set into k different part. Accordingly, k × l different trained model are obtained and evaluated for a given instance of the class of models. The given instance of the class model is evaluated according to the average of the performance result of the k × l different trained models.

In some embodiments, the evaluation of the performance is based on a confusion matrix. The confusion matrix is based on the evaluation of the following numbers:

- The true positive (TP) corresponds to a localization of a tube that is predicted as defective and is actually defective.
- The false positive (FP) corresponds to a localization of a tube that is predicted as defective and is actually flawless.
- The true negative (TN) corresponds to a localization of a tube that is predicated as flawless and is actually flawless.
- The false negative (FN) corresponds to a localization of a tube that is predicted as flawless and is actually defective.

The true positive rate (TPR) is defined as the ratio of true positive on the number of actual positive, namely TPR = TP / (FN + TP).

The false positive rate (FPR) is defined as the ratio of false positive on the number of actual negative, namely FPR = TN / (TN + FP).

For a model instance, reporting and joining the values of *TPR* and *FPR* on a 2D performance plane lead to build the so called ROC curves, ROC standing for Receiver Operating Characteristic. Finally, as a standard measure of performance, we consider AUC measure as the main performance measure to select an optimal instance within class of models. The AUC score simply computes a sample Area under the ROC curve.

In a step 207, a set of one or more trained models from one or more classes of models are selected for each localization on the tube resulting in the set of models 208.

The set of selected trained models may then be used for the prediction of the status of tubes for which this status is unknown. During the training, a set of trained models has been selected for each localization of the tube. First a status is determined for each localization on the tube using the associated set of trained models. The extracted features corresponding to this localization and associated to the tube under investigation are used as input of each of the set of selected models for this localization. Each trained model provides a predicted status for this localization. The results from each of these trained models are then combined to provide a consolidated prediction of the status for the localization on the tube. The combination may be done using a voting system, the consolidated prediction being the predication, defective or flawless, given by the majority of the selected trained models. Alternatively, stacking method may be used. In that case, the combination consists in using a further trained model taking as input the results of all the trained models from the set and providing as output the consolidated prediction. In that case, the trained model has been obtained from a further training step on the training data set similar to the training described to obtain the set of trained models. Any model among the previously described ones may be used.

Then the status for the whole tube is determined as follows. If the consolidated status for all the localization on the tube are flawless, then the status of the whole tube is flawless. If at least one localization has a defective status, then the status for the whole tube is set to defective.

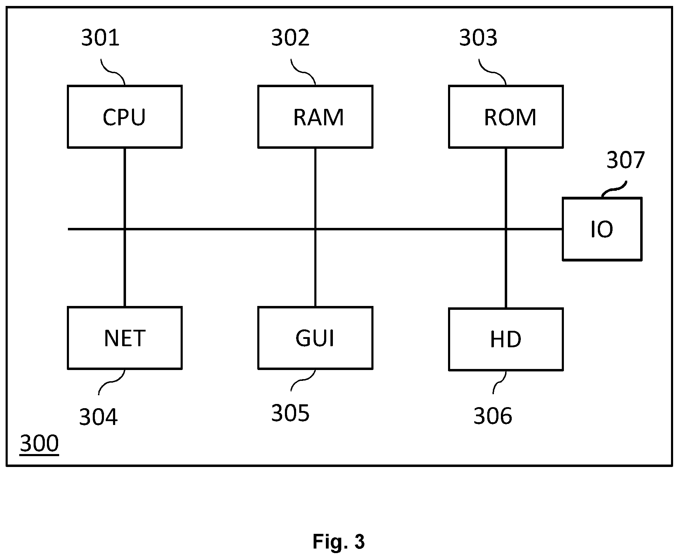

**Figure 3** is a schematic block diagram of a computing device 300 for implementation of one or more embodiments of the invention. The computing device **300** may be a device such as a micro-computer, a workstation or a light portable device. The computing device **300** comprises a communication bus connected to:

- a central processing unit **301,** such as a microprocessor, denoted CPU;
- a random access memory **302,** denoted RAM, for storing the executable code of the method of embodiments of the invention as well as the registers adapted to record variables and parameters necessary for implementing the method according to embodiments of the invention, the memory capacity thereof can be expanded by an optional RAM connected to an expansion port for example;
- a read only memory **303,** denoted ROM, for storing computer programs for implementing embodiments of the invention;
- a network interface **304** is typically connected to a communication network over which digital data to be processed are transmitted or received. The network interface **304** can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU **301;**
- a graphical user interface **305** may be used for receiving inputs from a user or to display information to a user;
- a hard disk **306** denoted HD may be provided as a mass storage device;
- an I/O module **307** may be used for receiving/sending data from/to external devices such as a video source or display.

The executable code may be stored either in read only memory **303,** on the hard disk **306** or on a removable digital medium such as for example a disk. According to a variant, the executable code of the programs can be received by means of a communication network, via the network interface **304,** in order to be stored in one of the storage means of the communication device **300,** such as the hard disk **306,** before being executed.

The central processing unit **301** is adapted to control and direct the execution of the instructions or portions of software code of the program or programs according to embodiments of the invention, which instructions are stored in one of the aforementioned storage means. After powering on, the CPU **301** is capable of executing instructions from main RAM memory **302** relating to a software application after those instructions have been loaded from the program ROM **303** or the hard-disc (HD) **306** for example. Such a software application, when executed by the CPU 301, causes the steps of the flowcharts of the invention to be performed.

Any step of the algorithms of the invention may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

**Claims**

1. A method of flawless tube detection, wherein the method comprises:

   - obtaining raw data from an eddy current sensor displaced into a tube in a steam generator;
   - segmenting the tube into different parts based on its geometry;
   - computing, for each part of the tube, a plurality of frames of data, each frame corresponding to a given feature of a set of features computed from the raw data associated with the part of the tube;
   - for each part of the tube, predicting whether the part of the tube is flawless using at least one trained machine learning model on the plurality of frames of data associated with the part of the tube, the trained machine learning model being trained on frames of data from the same part of different tubes; and
   - predicting whether the tube is flawless from the prediction obtained for each part of the tube.

2. The method of claim 1, wherein the set of features comprises at least one feature in each of the following categories:

   - Mono-Frequency Mono-Channel measures;
   - Mono-Frequency Poly-Channel measures;
   - Poly-Frequency Poly-Channel measures.

3. The method of claim 1, wherein the set of features is different for at least two different parts of the tube.

4. The method of claim 1, wherein the machine learning model belongs to two different classes of machine learning models for at least two different parts of the tube.

5. The method of claim 1, wherein the machine learning model of the trained machine learning model is selected by training among a plurality of machine learning model classes.

6. The method of claim 1, wherein, for each part of the tube, predicting whether the part of the tube is flawless comprises:

   - obtaining a first prediction using each trained machine learning model of a plurality of trained machine learning models; and
   - predicting whether the part of the tube is flawless from the combination of first predictions.

7. The method of claim 6, wherein the combination is made using a voting system.

8. The method of claim 7, wherein the combination is made using a further trained machine learning model taking as input the first prediction.

9. The method of claim 1, wherein the trained machine learning model is trained using a supervised training method.

10. The method of claim 1, wherein the trained machine learning model is trained using an unsupervised training method.

11. A computer program product for a programmable apparatus, the computer program product comprising a sequence of instructions for implementing a method according to any one of claims 1 to 10, when loaded into and executed by the programmable apparatus.

12. A non-transitory computer-readable storage medium storing instructions of a computer program for implementing a method according to any one of claims 1 to 10.

13. A device for flawless tube detection, wherein the device comprises a processor configured for:

- obtaining raw data from an eddy current sensor displaced into a tube in a steam generator;
- segmenting the tube into different parts based on its geometry;
- computing, for each part of the tube, a plurality of frames of data, each frame corresponding to a given feature of a set of features computed from the raw data associated with the part of the tube;
- for each part of the tube, predicting whether the part of the tube is flawless using at least one trained machine learning model on the plurality of frames of data associated with the part of the tube, the trained machine learning model being trained on frames of data from the same part of different tubes; and
- predicting whether the tube is flawless from the prediction obtained for each part of the tube.

**Amended claims in accordance with Rule 137(2) EPC.**

1. A method of flawless tube detection for predicting whether a tube in a steam generator is flawless, wherein the method comprises by a computing device:

- obtaining raw data from an eddy current sensor displaced into the tube;
- segmenting the tube into different parts based on its geometry;
- for each part of the tube, computing a plurality of localized frames of data from the raw data associated with the part of the tube;
- for each part of the tube computing a set of features from the plurality of localized frames of data;
- for each part of the tube, predicting whether the part of the tube is flawless using at least one trained machine learning model on the plurality of features associated with the part of the tube, the trained machine learning model being trained on features computed from the same part of different tubes; and
- predicting whether the tube is flawless from the prediction obtained for each part of the tube; wherein
- at least two trained machine learning models, each used for a different part of the tube, belong to two different classes of machine learning models.

2. The method of claim 1, wherein the raw data are obtained at different frequency, the set of features comprises at least:

- one feature computed from a single localized data frame;
- one feature computed from at least two different localized data frames computed from raw data at the same frequency;
- one feature computed from at least two different localized data frames computed from raw data at different frequencies.

3. The method of claim 1, wherein the set of features is different for at least two different parts of the tube.

4. The method of claim 1, wherein the machine learning model of the trained machine learning model is selected by training among a plurality of machine learning model classes.

5. The method of claim 1, wherein, for each part of the tube, predicting whether the part of the tube is flawless comprises:

- obtaining a first prediction using each trained machine learning model of a plurality of trained machine learning models; and
- predicting whether the part of the tube is flawless from the combination of first predictions.

6. The method of claim 5, wherein the combination is made using a voting system.

7. The method of claim 6, wherein the combination is made using a further trained machine learning model taking as input the first prediction.

8. The method of claim 1, wherein the trained machine learning model is trained using a supervised training method.

9. The method of claim 1, wherein the trained machine learning model is trained using an unsupervised training method.

10. A computer program product for a programmable apparatus, the computer program product comprising a sequence of instructions for implementing a method according to any one of claims 1 to 9, when loaded into and executed by the programmable apparatus.

11. A non-transitory computer-readable storage medium storing instructions of a computer program for implementing a method according to any one of claims 1 to 9.

12. A device for flawless tube detection for predicting whether a tube in a steam generator is flawless, wherein the device comprises a processor configured for:

 - obtaining raw data from an eddy current sensor displaced into the tube;
 - segmenting the tube into different parts based on its geometry;
 - for each part of the tube, computing a plurality of localized frames of data from the raw data associated with the part of the tube;
 - for each part of the tube computing a set of features from the plurality of localized frames of data;
 - for each part of the tube, predicting whether the part of the tube is flawless using at least one trained machine learning model on the plurality of features associated with the part of the tube, the trained machine learning model being trained on features computed from the same part of different tubes; and
 - predicting whether the tube is flawless from the prediction obtained for each part of the tube; wherein
 - at least two trained machine learning models, each used for a different part of the tube, belong to two different classes of machine learning models.

**Fig. 1**

**Fig. 2**

201 — Features

202 — Features for one frame localization

203 — For each model class

204 — For each hyper parameter set

205 — Training

206 — Evaluation of the model

207 — Selection

208 — Set of models

**Fig. 3**

Europäisches
Patentamt

European
Patent Office

Office européen
des brevets

**EUROPEAN SEARCH REPORT**

Application Number

EP 22 30 5540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUXIA TIAN ET AL: "Signal processing schemes for Eddy Current Testing of steam generator tubes of nuclear power plants", NUCLEAR ENGINEERING AND DESIGN, AMSTERDAM, NL, vol. 245, 21 December 2011 (2011-12-21), pages 78-88, XP028466983, ISSN: 0029-5493, DOI: 10.1016/J.NUCENGDES.2011.12.033 [retrieved on 2012-01-10] | 1-13 | INV. G01N27/90 |
| Y | * the whole document * | 4-8 | |
| X | XIANG ET AL: "Automated analysis of rotating probe multi-frequency eddy current data from steam generator tubes", INTERNATIONAL JOURNAL OF APPLIED ELECTROMAGNETICS AND MECHANICS, IOS PRESS, AMSTERDAM, NL , vol. 12 1 January 2000 (2000-01-01), pages 151-164, XP008158200, ISSN: 1383-5416 Retrieved from the Internet: URL:http://users.rowan.edu/~polikar/RESEARCH/PUBLICATIONS/ijaem00.pdf | 1-13 | |
| Y | * the whole document * | 4-8 | |

-----

-----

-/--

| | | |
|---|---|---|
| | | TECHNICAL FIELDS SEARCHED (IPC) |
| | | G01N |

The present search report has been drawn up for all claims

| Place of search | Date of completion of the search | Examiner |
|---|---|---|
| Munich | 21 September 2022 | De Masi, Rita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 22 30 5540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUSA N ET AL: "Profile reconstruction of simulated natural cracks from eddy current signals", NDT&E INTERNATIONAL, ELSEVIER, AMSTERDAM, NL, vol. 35, no. 1, 1 January 2002 (2002-01-01), pages 9-18, XP004305097, ISSN: 0963-8695, DOI: 10.1016/S0963-8695(01)00017-2 | 1-13 | |
| Y | * the whole document * | 4-8 | |
| X | TOMASZ CHADY ET AL: "Signal Restoration Using Dynamic Neural Network Model for Eddy Current Nondestructive Testing", IEEE TRANSACTIONS ON MAGNETICS, IEEE, USA, vol. 37, no. 5, 1 September 2001 (2001-09-01), XP011033944, ISSN: 0018-9464 | 1-13 | |
| Y | * the whole document * | 4-8 | TECHNICAL FIELDS SEARCHED (IPC) |
| Y | WRZUSZCZAK M ET AL: "Eddy current flaw detection with neural network applications", MEASUREMENT, INSTITUTE OF MEASUREMENT AND CONTROL. LONDON, GB, vol. 38, no. 2, 1 September 2005 (2005-09-01), pages 132-136, XP027617982, ISSN: 0263-2241 [retrieved on 2005-09-01] * the whole document * | 4-8 | |

The present search report has been drawn up for all claims

| Place of search | Date of completion of the search | Examiner |
|---|---|---|
| Munich | 21 September 2022 | De Masi, Rita |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2